# EUROPÄISCHE PATENTANMELDUNG

(11) **EP 1 093 307 A2**
(43) Veröffentlichungstag der Anmeldung: **18.04.2001**
(21) Anmeldenummer: 00122137.3
(22) Anmeldetag: 12.10.2000
(51) Int. Cl.: H04N 13/00

(54) **Verfahren, Schaltung und Anordnung zum stereoskopischen Betrieb eines Anzeigegerätes**

(30) Priorität: 14.10.1999 DE 19949546
(71) Anmelder: ELSA Aktiengesellschaft, 52070 Aachen (DE)
(72) Erfinder: Bender, Bernhard, 52070 Aachen (DE)
(74) Vertreter: Kohlmann, Kai, Dipl.-Ing.

(57) **Zusammenfassung**

Die Erfindung betrifft ein Verfahren, daß die Darstellung stereoskopischer Bilder auf einem elektronischen Anzeigegerät ermöglicht, dessen sichtbare Bildwiederholrate von der Bildwiederholrate der zum Eingang des Anzeigegerätes übertragenen Bilddaten abweicht oder dessen sichtbare Bilder zeitlich versetzt zu den zum Eingang des Anzeigegerätes übertragenen Bilddaten dargestellt werden.

Außerdem wird eine Schaltung sowie eine Anordnung zur Durchführung des Verfahrens vorgeschlagen.

## Beschreibung

Die Erfindung betrifft ein Verfahren zur Darstellung getrennter Bildinhalte für das rechte und linke Auge eines Betrachters einer elektronischen Anzeigeeinheit mit einer elektronischen Betrachtungshilfe, wobei ein bilderzeugendes Gerät ein Eingangssignal für die Anzeigeeinheit erzeugt und in mindestens einer stereoskopischen Betriebsart der Anzeigeeinheit die sichtbare Bildwiederholrate der Anzeigeeinheit in Phase und/oder Frequenz von der Phase und/oder Frequenz der Bildwiederholrate des Eingangssignals abweicht. Außerdem betrifft die Erfindung eine Schaltung sowie eine Anordnung zur Durchführung des Verfahrens.

Stereoskopische Bilddarstellungen von Einzelbildern und Bildsequenzen mit Bewegung erhalten eine immer größere Bedeutung, insbesondere auch bei multimedialen Anwendungen. Als Beispiele sind hier 3D-Architekturaufnahmen, dreidimensionale medizinische Bilddarstellung, Maschinenbau und Robotik, Information retrieval, Lehrfilme und Videokonferenzen anzuführen. Für eine stereoskopische Darstellung von Einzelbildem existieren derzeit Verfahren mit einem Anzeigegerät, insbesondere Computermonitor, welches alternierend die versetzten aus den beiden Augenperspektiven aufgenommenen Bilder wiedergibt. Die Verfahren beruhen auf der Interlaced Technik, bei der immer ein Bild abwechselnd dem linken oder dem rechten Auge gezeigt wird. Dabei erfolgt die Wiedergabe zweckmäßig Z.B. mit 100 Hz Bildwechselfrequenz oder höher, um einen flimmerfreien Eindruck zu gewährleisten. Die Sequenz der Teilbilder kann dann mit synchron zum Bildschirm gesteuerten Betrachtungshilfen, insbesondere Shutter-Brillen betrachtet werden. Durch die Shutter-Technologie wird - nicht wahrnehmbar für den Träger - mit hoher Frequenz jeweils abwechselnd ein Auge abgedeckt, wodurch der räumliche Seheindruck entsteht.

Bei Computermonitoren mit Kathodenstrahlröhren besteht eine Gleichzeitigkeit zwischen dem dargestellten Bild und dem Eingangssignal des Monitors. Das Steuersignal für die Shutterbrille kann daher direkt vom bilderzeugenden Gerät erzeugt und an die Betrachtungshilfe übermittelt werden. Hierzu wird die Shutterbrille beispielsweise direkt an den Stereoausgang der Grafikkarten angeschlossen. Der im VESA-Standard definierte Stereoausgang verfügt über eine Stromversorgung und eine Steuerleitung, wobei über die Steuerleitung die Shutterbrille angesteuert wird.

Neuere Entwicklungen im Zusammenhang mit der Einführung digitaler Schnittstellen zwischen dem bilderzeugenden Gerät und dem digitalen Anzeigegerät sehen vor, daß die Gleichzeitigkeit zwischen dem Eingangssignal des Monitor und dem dargestellten Bild aufgehoben wird. Als Grund für die Aufhebung kommt beispielsweise eine Zwischenspeicherung der mit dem Eingangssignal übertragenen Bilddaten in Betracht, um diese in einer anderen Auflösung und/oder einer anderen Bildwiederholrate darzustellen. Für die Darstellung mit anderer Bildwiederholrate werden die Bilddaten mehrerer aufeinanderfolgende Bilder des Eingangssignals für die Berechnung des dargestellten Bildes auf dem Anzeigegerät verrechnet. Die Verrechnung sorgt dafür, daß vor allem bewegte Bildsequenzen oder Bildteile ohne allzu störende Artefakte mit einer vom Eingangssignal abweichenden Bildwiederholrate darstellbar sind. Zur Vermeidung der Artefakte können beispielsweise einzelne Bilder wiederholt werden. Alternativ kann ein stufenweises Überblenden der Bilder des Eingangssignals erfolgen. Schließlich ist die Synthese von Zwischenbildern (Motion Estimation) mit aufwendigeren Algorithmen möglich.

Durch die mit der Verrechnung verbundene Zwischenspeicherung der Bilddaten geht jedoch der zeitliche Zusammenhang zwischen dem Eingangssignal des Anzeigegerätes und dem dargestellten Bild sowohl in Frequenz als auch Phase verloren. Als Folge davon kann das bilderzeugende Gerät nicht mehr direkt die Signale zur Ansteuerung der Betrachtungshilfe erzeugen, da es nicht mehr über die notwendigen Informationen über die sichtbare Bildabfolge verfügt. Außerdem geht bei einer Verrechnung mehrerer Bilder zum Zwecke der Umwandlung der Bildwiederholrate die notwendige Trennung der Bilder für das rechte und linke Auge verloren.

Ausgehend hiervon liegt der Erfindung die Aufgabe zugrunde, ein Verfahren der eingangs erwähnten Art zu schaffen, daß auch bei aufgehobener Gleichzeitigkeit zwischen dem Eingangssignal des Anzeigegerätes und dem dargestellten Bild eine stereoskopische Betriebsart des Anzeigegerätes ermöglicht. Außerdem soll eine zur Durchführung des Verfahrens geeignete Schaltung und Anordnung vorgeschlagen werden.

Die Lösung dieser Aufgabe beruht auf dem Gedanken, die Verarbeitungspfade des Eingangssignals des Anzeigegerätes aufzutrennen und das Eingangssignals zur Unterscheidung der für das rechte und linke Auge des Betrachters bestimmten Bilddaten auszuwerten, wobei Steuereinheiten die Bildinhalte dem jeweils zutreffenden Verarbeitungspfad zuordnen.

Im einzelnen wird die Aufgabe durch die Merkmale des Anspruchs 1 gelöst.

Wenn bei stereoskopischer Betriebsart der Anzeigeeinheit zumindest die Auflösung gegenüber der nicht-stereoskopische n Betriebsart reduziert wird, so daß in beiden Betriebsarten eine übereinstimmende Menge an Zwischenspeicher verwendet wird, läßt sich vorteilhaft für beide Verarbeitungseinheiten ein gemeinsamer Speicher nutzen.

Der Wechsel zwischen der stereoskopischen und der nicht-stereoskopischen Betriebsart der Anzeigeeinheit erfolgt vorzugsweise über einen Code im Eingangssignal, insbesondere durch Codierung des Diskriminierungssignals, die eine automatische Unterscheidung der stereoskopischen von der nicht-stereoskopische n Betriebsart erlaubt.

Ein weiteres Problem ist die Latenz, daß heißt der zeitliche Versatz, zwischen dem vom bilderzeugenden Gerät zum Anzeigegerät übertragenen Bilddaten und dem für den Betrachter tatsächlich sichtbaren Bild. Bei interaktiven Anwendungen muß diese Latenz bekannt sein, um andere Daten, wie beispielsweise Tondaten oder Eingabedaten von Eingabegeräten, wie beispielsweise eines Joysticks, in ausreichender Synchronität mit dem sichtbaren Bild erzeugen zu können. Nur so kann ein insgesamt kohärenter zeitlicher Eindruck beim Betrachter entstehen. Eine Lösung dieses Problems besteht darin, daß dem bilderzeugenden Gerät eine Information über diese Latenz übermittelt wird. Gleichzeitig kann dem bilderzeugenden Gerät auch eine Information über das gerade sichtbare Bild (rechtes oder linkes Auge) übermittelt werden, um dort ausgewertet zu werden.

Eine zweckmäßige Schaltung zur Durchführung des erfindungsgemäßen Verfahrens ergibt sich aus den Ansprüchen 7 bis 12. Die Schaltung ist vorteilhaft in das Anzeigegerät eingebaut. In einer Ausgestaltung der Schaltung als leistungsfähiger integrierter Schaltkreis können die Verarbeitungseinheiten sowie die Umschalteinrichtungen 5, 6 in einer elektronischen Schaltung zusammengefaßt sein, die zeitlich abwechselnd jeweils die Bilddaten für das rechte und linke Auge verarbeitet und an die Anzeigeeinheit weitergibt. Physikalisch liegen dann keine getrennten Verarbeitungseinheiten und Umschalteinrichtungen mehr vor, sondern eine Schaltung, die die Funktionen der getrennten Verarbeitungseinheiten und Umschalteinrichtungen erfüllt.

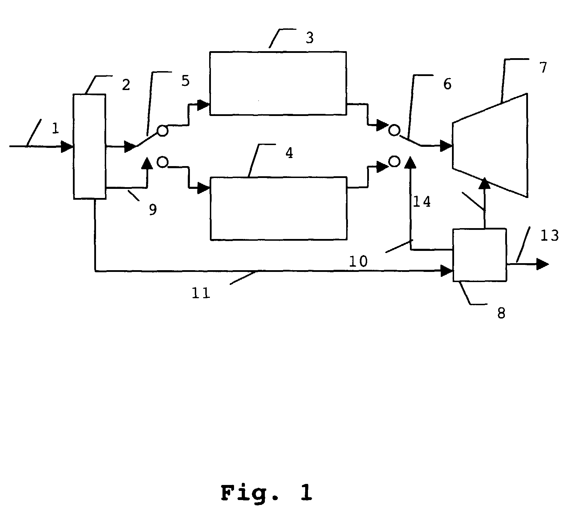

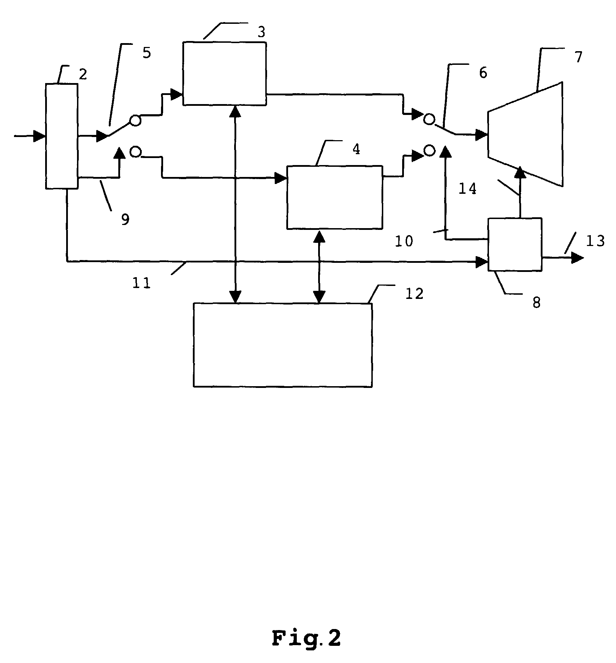

Nachfolgend wird die Erfindung anhand von 2 in den Figuren 1 und 2 dargestellten Prinzipschaltbildern näher erläutert:

Ein erstes Ausführungsbeispiel einer Anordnung zur Durchführung des erfindungsgemäßen Verfahrens zeigt Figur 1. Ein von einem in der Figur 1 nicht dargestellten, bilderzeugenden Gerät kommendes Eingangssignal 1 gelangt in eine Eingangsstufe 2, in der das Eingangssignal ausgewertet wird. Optional weist die Eingangsstufe eine Erkennungseinheit auf, die einen Code zur Identifizierung der stereoskopischen oder nicht-stereoskopische n Betriebsart im Eingangssignal erkennt.

Eine erste Umschalteinrichtung 5 steuert den Datenfluß von der Eingangsstufe 2 zu zwei getrennten Verarbeitungseinheiten 3,4 für die getrennte Verarbeitung der Bilddaten für das rechte und linke Auge, wobei die Verarbeitungseinheiten 3,4 die Bildwiederholrate und/oder die Auflösung der Bilder ändern.

Im Ausführungsbeispiel nach Figur 1 sind die für die Zwischenspeicherung der Bilddaten für das rechte und linke Auge erforderlichen Speicher in die Verarbeitungseinheiten 3,4 integriert. Über eine zweite Umschalteinrichtung 6 gelangt der Datenfluß von den Verarbeitungseinheiten 3,4 zu einer Anzeigeeinheit 7. Eine Steuerungseinheit 8 steuert die zweite Umschalteinrichtung 6, die Anzeigeeinheit 7 sowie die Verarbeitungseinheiten 3,4 und weist darüber hinaus einen nicht notwendigerweise drahtgebundenen Anschluß 13 für die nicht dargestellte Betrachtungshilfe auf.

Zur Erzeugung des sichtbaren Bildes steuert die Steuerungseinheit 8 die Auflösung und Bildwiederholrate der Anzeigeeinheit 7 über ein Signal 14. In gleicher Weise steuert die Steuerungseinheit 8 durch in den Figuren nicht dargestellte Signale die Auflösung und Bildwiederholrate der Verarbeitungseinheiten 3, 4, um die Verarbeitung des Eingangssignals für eine Anzeige auf der Anzeigeeinheit 7 zu ermöglichen. Die Steuerung der Auflösung und Bildwiederholrate von nicht-stereoskopisch betriebenen digitalen Anzeigeeinheiten ist an sich bekannt.

In einer Ausgestaltung der Ausführungsform kann die Steuerungseinheit 8 eine Erkennungslogik zur Feststellung des Anschlusses von Betrachtungshilfen sowie mindestens einen Informationsspeicher zur Weitergabe von Informationen über das Anzeigegerät und/oder die angeschlossenen Betrachtungshilfen aufweisen.

Die Eingangsstufe 2 empfängt das Eingangssignal 1, das vom bilderzeugenden Gerät übermittelt wird. Das kodierte Eingangssignal 1 enthält im Zeitvielfachverfahren (=Zeit-Multiplex-Verfahren) die Bilddaten der darzustellenden Bilder, Referenzdaten für die korrekte zeitliche Abfolge der Datenübertragung sowie in der stereoskopischen Betriebsart ein Diskriminierungssignal, das für das jeweils nächste Bild einen der beiden Pfade mit den Verarbeitungseinheiten 3, 4 ansteuert und damit das Bild dem rechten oder linken Auge des Betrachters zuordnet.

Die Eingangsstufe 2 erzeugt ein Steuersignal 11, wenn die optionale Erkennungseinheit im Eingangssignal 1 Diskriminierungssignale für die stereoskopische Betriebsart enthält. Dieses Steuersignal 11 aktiviert in der Steuerungseinheit 8 die Ansteuerung der Anzeigeeinheit 7 in der stereoskopischen Betriebsart.

Außerdem wertet die Eingangsstufe 2 das Diskriminierungssignal im Eingangssignal für die beiden Pfade mit den Verarbeitungseinheiten 3, 4 aus und erzeugt ein erstes Umschaltsignal 9, um den Datenfluß von der Eingangsstufe 2 auf die beiden getrennten Verarbeitungseinheiten 3,4 zu steuern.

Das von der Steuerungseinheit 8 erzeugte zweite Umschaltsignal 10 steuert die zweiten Umschalteinrichtung 6, die abhängig von dem zweiten Umschaltsignal 10 die Bilddaten des rechten oder linken Verarbeitungseinheit 3,4 für die Darstellung auf der Anzeigeeinheit 7 auswählt.

Schließlich stellt die Steuerungseinheit 8 an einem Anschluß ein weiteres Signal 13 zur Ansteuerung der Betrachtungshilfe zur Verfügung. Dieses Signal 13 bestimmt die Zuordnung der sichtbaren Bilder zu dem rechten und linken Augen des Betrachters, sofern der stereoskopische Modus aktiviert ist. Das Signal 13 kann sowohl leitungsgebunden als auch drahtlos, zum Beispiel durch Infrarot-Signale, an die Betrachtungshilfe übertragen werden.

In einer Ausgestaltung der Erfindung nach Figur 2 weisen die Verarbeitungseinheiten 3, 4 keinen eigenen Speicher für die Verarbeitung der Bilddaten auf, sondern nutzen effizient einen gemeinsamen Speicher 12. Im übrigen stimmt die Anordnung nach Figur 2 mit der nach Figur 1 überein, so daß zur Vermeidung von Wiederholungen auf die Erläuterungen der Figur 1 Bezug genommen wird.

Über das Steuersignal 11 kann bei Verwendung eines gemeinsamen Speichers 12 in der stereoskopischen Betriebsart durch die Steuerungseinheit 8 die Auflösung der Anzeigeeinheit 7 reduziert werden, so daß der Speicherbedarf in der stereoskopischen Betriebsart gleich dem in der nicht-stereoskopischen Betriebsart ist. Außerdem kann das Steuersignal 11 genutzt werden, um in der Steuerungseinheit 8 die Bildwiederholrate der Anzeigeeinheit 7 zu erhöhen, so daß eine flimmerfreien Darstellung der Bilder auch in der stereoskopischen Betriebsart erreicht wird. Beispielsweise kann die Darstellung in der nicht-stereoskopischen Betriebsart 1280 Punkte mal 1024 Zeilen bei einer Bildwiederholrate von 85Hz betragen. Mit gleiehem Speicherbedarf kann die stereoskopische Betriebsart mit 800 Punkten mal 600 Zeilen bei 140Hz eingestellt werden.

Wie bereits erwähnt, enthält das Eingangssignal in der stereoskopischen Betriebsart das Diskriminierungssignal. Dieses Signal kann entweder parallel zu den Bilddaten oder gemeinsam mit den Referenzdaten während der Austastlücken des Bildsignals übertragen werden. Anhand der Form des Diskriminierungssignals unterscheidet die Erkennungseinheit in der Eingangsstufe 2 automatisch zwischen stereoskopischer und normaler Betriebsart. Aktuelle digitale Schnittstellen bieten die Möglichkeit, Signale, wie das Diskriminierungssignal, auf der vorhandenen Eingangsleitung im Zeitvielfachverfahren mit den Bilddaten zu übertragen. Ein Beispiel für eine derartige Schnittstelle ist der digitale Standard DVI (Digital Visual Interface) von der Digital Display Working Group (vgl. www.ddw.org, DVI 1.0 Specification vom 2. April, 1999). Mit einer maximalen QXGA-Auflösung von 2048x1536 Bildpunkten kann er auch CRTs mit analogen Signalen versorgen und wird von namhaften PC-Herstellern favorisiert.

Eine geeignete Kodierung für das Diskriminierungssignal ist beispielsweise ein negativer Puls definierter Dauer für die Ansteuerung der ersten Verarbeitungseinheit 3 und ein positiver Puls definierter Dauer für die zweite Verarbeitungseinheit 4. Bleibt das Diskriminierungssignal aus, wird die stereoskopische Betriebsart nicht aktiviert. Durch Verwenden aktueller digitaler Schnittstellen wird darüber hinaus die Kompatibilität der Datenübertragung in der stereoskopischen Betriebsart mit bereits eingesetzten Verfahren zur digitalen Bilddatenübertragung gewährleistet.

Zur automatischen Erkennung der stereoskopischen Fähigkeiten kann das Anzeigegerät einen auslesbaren Speicher bereithalten, in dem Informationen über seine Eigenschaften sowie wahlweise über angeschlossene Betrachtungshilfen hinterlegt werden. Durch Auslesen dieses Speichers kann das bilderzeugende Gerät (z. B. ein Computer) ermitteln, ob und wie das angeschlossene Anzeigegerät stereoskopische Betriebsarten unterstützt und sich darauf einstellen und/oder dem Benutzer entsprechende Wahlmöglichkeiten anbieten. Eine für diesem Zweck geeignete Schnittstelle zwischen Anzeigegerät und bilderzeugendem Gerät existiert bereits im Form der VESA DDC-Schnittstelle (vgl. DDC Specification 2.0, VESA). DDC ist die englische Abkürzung für **D**isplay **D**ata **C**hannel (Anzeige-Daten-Kanal) und wird oft auch als **Digital Control** bezeichnet. Es handelt sich um einen 1995 von der VESA (**V**ideo **E**lectronics **S**tandards **A**ssociation) eingeführten, digitalen Steuerkanal für moderne Monitore, über den diese dem Betriebssystem bzw. der Grafikkarte ihre technischen Daten mitteilen können. Durch DDC können sich Monitor, Grafikkarte und Betriebssystem verständigen.

## Patentansprüche

1. Verfahren zur Darstellung getrennter Bildinhalte für das rechte und linke Auge eines Betrachters einer elektronischen Anzeigeeinheit mit einer elektronischen Betrachtungshilfe, wobei ein bilderzeugendes Gerät ein Eingangssignal für die Anzeigeeinheit erzeugt und zumindest in einer stereoskopischen Betriebsart der Anzeigeeinheit die sichtbare Bildwiederholrate der Anzeigeeinheit in Phase und/oder Frequenz von der Phase und/oder Frequenz der Bildwiederholrate des Eingangssignals abweicht, **dadurch gekennzeichnet,** daß in jeder stereoskopischen Betriebsart der Anzeigeeinheit ein Steuersignal zur Ansteuerung der Betrachtungshilfe synchron zur sichtbaren Bildwiederholrate erzeugt und an die Betrachtungshilfe übertragen wird.

2. Verfahren nach Anspruch 1, **dadurch gekennzeichnet,** daß die Bilddaten für das rechte und linke Auge auf zwei getrennten Pfaden verarbeitet werden, wobei die Bilddaten des Eingangssignals jeweils in den Pfad eingegeben werden, der durch das im Eingangssignal enthaltene Diskriminierungssignal für die Ansteuerung einer der Pfade ausgewählt wird, und wobei die für die Anzeigeeinheit bestimmten Daten jeweils abwechselnd von beiden Pfaden ausgelesen werden und zur Ansteuerung der Betrachtungshilfe ein den zum Auslesen ausgewählten Pfad kennzeichnendes Signal übertragen wird.

3. Verfahren nach Anspruch 1 oder 2, **dadurch gekennzeichnet,** daß bei Auftreten des Diskriminierungssignals im Eingangssignal ein Steuersignal für die stereoskopische Betriebsart der Anzeigeeinheit und bei Ausbleiben des Diskriminierungssignal im Eingangssignal ein Steuersignal für die nicht-stereoskopische Betriebsart der Anzeigeeinheit erzeugt wird.

4. Verfahren nach Anspruch 3, **dadurch gekennzeichnet,** daß bei stereoskopischer Betriebsart der Anzeigeeinheit zumindest die Auflösung gegenüber der nicht-stereoskopischen Betriebsart reduziert wird, so daß in beiden Betriebsarten eine übereinstimmende Menge an Zwischenspeicher verwendet wird.

5. Verfahren nach einem der Ansprüche 1 bis 4, **dadurch gekennzeichnet,** daß der Wechsel zwischen der stereoskopischen und der nicht-stereoskopischen Betriebsart der Anzeigeeinheit über einen Code im Eingangssignal, insbesondere das Diskriminierungssignal erfolgt.

6. Verfahren nach einem der Ansprüche 1 bis 5, **dadurch gekennzeichnet,** daß Informationen über das aktuell sichtbare Bild auf der Anzeigeeinheit und/oder die Latenz zwischen dem vom bilderzeugenden Gerät zum Anzeigegerät übertragenen Bilddaten im Eingangssignal und dem sichtbaren Bild über eine Schnittstelle an das bilderzeugende Gerät zurückübertragen werden.

7. Schaltung zur Durchführung des Verfahrens nach einem der Ansprüche 1 bis 6, **gekennzeichnet durch,**
- eine Eingangsstufe 2 zur Auswertung eines Eingangssignals 1 und zur Steuerung einer mit der Eingangsstufe 2 verbundenen ersten Umschalteinrichtung 5, wobei an die erste Umschalteinrichtung 5 zwei Verarbeitungseinheiten 3,4 für die getrennte Verarbeitung der Bilddaten im Eingangssignal angeschlossen sind,
- eine zweite Umschalteinrichtung 6 an die die beiden Verarbeitungseinheiten 3,4 angeschlossen sind, wobei die zweite Umschalteinrichtung 6 der Steuerung des Datenfluß von den Verarbeitungseinheiten 3,4 zu einer Anzeigeeinheit 7 dient und
- eine Steuerungseinheit 8 mit einen Anschluß 13 für eine Betrachtungshilfe, die der Steuerung der zweiten Umschalteinrichtung 6, der Verarbeitungseinheiten 3,4 und der Anzeigeeinheit 7 dient.

8. Schaltung nach Anspruch 7, **dadurch gekennzeichnet,** daß die Steuerungseinheit 8 eine Erkennungslogik zur Feststellung des Anschlusses von Betrachtungshilfen und/oder mindestens einen Informationsspeicher zur Weitergabe von Informationen über das Anzeigegerät und/oder die angeschlossenen Betrachtungshilfen aufweist.

9. Schaltung nach Anspruch 7 oder 8, **dadurch gekennzeichnet,** daß die Eingangsstufe 2 eine Erkennungseinheit aufweist, die einen Wechsel zwischen der stereoskopischen und der nicht-stereoskopischen Betriebsart einer angeschlossenen Anzeigeeinheit über einen Code im Eingangssignal erkennt und ein Steuersignal 11 für die jeweilige Betriebsart erzeugt, und die Steuereinheit 8 einen Eingang für das von der Erkennungseinheit der Eingangsstufe 2 kommende Steuersignal 11 aufweist.

10. Schaltung nach einem der Ansprüche 7 bis 9, **dadurch gekennzeichnet,** daß die für die Zwischenspeicherung der Bilddaten des Eingangssignals 1 erforderlichen Speicher in die Verarbeitungseinheiten 3,4 integriert sind.

11. Schaltung nach einem der Ansprüche 7 bis 9, **dadurch gekennzeichnet,** daß die Verarbeitungseinheiten 3, 4 an einen gemeinsamen Speicher 12 für die Zwischenspeicherung der Bilddaten des Eingangssignals 1 angeschlossen sind.

12. Schaltung nach den Ansprüchen 7 bis 11, **dadurch gekennzeichnet,** daß die Verarbeitungseinheiten 3, 4 sowie die Umschalteinrichtungen 5, 6 in einer elektronischen Schaltung zusammengefaßt sind, die zeitlich abwechselnd jeweils die Bilddaten für das rechte und linke Auge verarbeitet und an die Anzeigeeinheit weitergibt.

13. Anordnung zur Durchführung des Verfahrens nach einem der Ansprüche 1 bis 6, **gekennzeichnet durch** eine Schaltung nach einem der Ansprüche 7 bis 12, ein an die Eingangsstufe 2 der Schaltung angeschlossenes bilderzeugendes Gerät, eine an die zweite Umschalteinrichtung 6 und die Steuerungseinheit 8 angeschlossene Anzeigeeinheit 7 sowie eine an die Steuerungseinheit 8 angeschlossene Betrachtungshilfe für die stereoskopische Betriebsart der Anzeigeeinheit.

14. Anordnung zur Durchführung des Verfahrens nach Anspruch 13, **dadurch gekennzeichnet,** daß zumindest die Betrachtungshilfe drahtlos an die Steuerungseinheit 8 angeschlossen ist.
